# EUROPEAN PATENT APPLICATION

(11) **EP 3 375 290 A2**
(43) Date of publication of application: **19.09.2018**
(21) Application number: 16813074.8
(22) Date of filing: 10.11.2016
(51) Int. Cl.: A23B 7/155, A23L 3/3463, A23B 9/28, A23J 3/34, A23L 3/3571

(54) **PROCEDURE FOR REDUCING CONTAMINANTS IN VEGETABLE PROTEIN MATTER**

(30) Priority: 11.11.2015 ES 201531627
(60) Divisional application: 18181929.3
(71) Applicant: Pevesa Biotech, S.A., 41520 El Viso Del Alcor (Sevilla) (ES)
(72) Inventor: MIELGO IZA, Iñaki, 41520 El Viso Del Alcor (Sevilla) (ES); MÁRQUEZ LÓPEZ, José Carlos, 41520 El Viso Del Alcor (Sevilla) (ES); ROMERO RAMÍREZ, Eduardo J., 41520 El Viso Del Alcor (Sevilla) (ES)
(74) Representative: Pons
(86) International application number: PCT/ES2016/070797
(87) International publication number: WO 2017/081347

(57) **Abstract**

This invention refers to a procedure for reducing inorganic (heavy metals) and organic (aflatoxins, moulds, etc.) contaminants in high-protein vegetable matter, mainly originating from rice. Applying said procedure to raw vegetable matter results in the obtainment of derivatives presenting levels of these contaminants significantly lower than the legal limits set by health authorities. Following the procedure set out in this invention, high-quality protein derivatives are obtained usable for vitamin and nutritional supplements, milk formula for babies, sports nutrition, clinical nutrition, animal feed ingredients, etc.

## Description

This invention refers to a procedure for reducing inorganic (heavy metals) and organic (aflatoxins, moulds, etc.) contaminants in high-protein vegetable matter, mainly originating from rice. Applying said procedure to raw vegetable material results in the obtainment of derivatives presenting levels of these contaminants, the formerly contaminated material can then be processed, the outcome being a product with contaminant levels below the limits set for the same. Following the procedure in this invention, high quality protein derivatives are obtained usable for vitamin and nutritional supplements, milk formula for babies, animal feed ingredients, etc.

### STATE OF THE ART

The use of plant products (particularly isolated, concentrated and hydrolysed protein) in various fields is common for several applications. However, there are risks associated to the presence of contaminants in the same, as well as strict regulations for certain cases such as current European legislation, in particular 1881/2006 (including its most recent amendments such as 488/2014 regulating maximum cadmium limits in different foodstuffs), or the EFSA recommendations on arsenic. In this sense, the use of vegetable derivatives is seen as compromised by the presence of organic or inorganic contaminants. In order to obtain end products compliant with these strict requirements, it is necessary to opt for initial products in which the contaminant levels can be guaranteed.

There are numerous examples relating to the absorption of metals and proteins as described in document US4355132, where a method for extracting heavy metals using a lattice of proteins of vegetable origin, as well as various methods for recovering any metals that may be of interest, such as those described in document DE10050873.

Methods for purifying raw vegetable matter are unusual and generally complicated like those described in document KR20030061871, and usually focus on eliminating a single, specific metal.

On the other hand, methods for detoxifying mycotoxins tend to be complicated, like that described in document CN102940131, which uses an agent containing a mixture of algae, yeasts and clays which subsequently require elimination. Alternatively, some straightforward methods are applied but they require the use of undesirable substances like ammonia, such as that described in NL9000367.

Therefore, there is a clear need for straightforward, mutually compatible but versatile processes, to eliminate troublesome contaminants whose maximum presence in consumer products must be controlled.

### DESCRIPTION OF THE INVENTION

Therefore, as a first aspect, this invention refers to a procedure for reducing contaminants in vegetable protein which includes performing each of these steps at least once:
a) Mixing the initial vegetable matter with water and at least one type of protease enzyme, bringing said mixture to a pH point of between 3 and 10 and agitating it for a while, at least 20 minutes, at a temperature of between 20 °C to 90 °C,
b) Carrying out a solid-liquid separation of the product obtained in the previous stage,
c) Optionally, subjecting the hydrolysate obtained in the previous stage to a sterilisation process.
The protease enzyme can be any familiar to an expert in the field which is capable of working in the conditions experienced by the medium. It can be from a natural source or acquired by means of different biotechnological processes, and its conditions must be adjusted in accordance with the catalyst used.
In a preferred embodiment, the mixture's pH at stage (a) should be between 5 and 8. In a more preferred embodiment pH will be 7.5.
In another preferred embodiment, agitation time at stage (a) will last between 60 and 180 minutes. In a more preferred embodiment, agitation time at stage (a) lasts 70 minutes.
In another preferred embodiment, the mixture's temperature at stage (a) is 50 °C to 80 °C. In a more preferred embodiment, the mixture's temperature at stage (a) is 60 °C.
In a more preferred embodiment, to perform sterilisation at stage (c) a choice must be made between UHT sterilisation or pasteurisation, although other known sterilisation technique processes can also be applied.
A further aspect of this invention refers to an alkali treatment procedure which includes performing each of these stages at least once:
a1) Mixing the initial vegetable matter with water in the presence of hydrogen peroxide, bringing this mixture to a pH of above 9 and keeping it in agitation for some time, at least, 20 minutes, at a temperature of between 75 °C and 95 °C and
b1) Optionally, performing a wash and a solid-liquid separation of the product obtained at stage a1).
In a preferred embodiment the agitation time for the mixture from stage (a1) is 60 minutes.
In another preferred embodiment, temperature at stage (a1) is 85 to 90 °C.
In a preferred embodiment, this alkaline treatment procedure is carried out prior to the enzymatic hydrolysis procedure described above.
A further aspect of this invention refers to a neutral washing procedure which includes performing each of these stages at least once:
a2) Mix the initial vegetable matter with water, bring this mixture to a pH of between 6.5 and 8.5 and keep in agitation for a period of between 20 and 60 minutes, at a temperature of between 60 and 90 °C,
b2) Perform a wash and a solid-liquid separation.
In a more preferred embodiment the agitation time for the mixture from stage (a2) is 30 minutes.

In another preferred embodiment, the temperature for the mixture from stage (a2) is 60 to 80 °C. In a most preferred embodiment the temperature for the mixture from stage (a2) is 66 °C.
In another more preferred embodiment, pH at stage (a2) is between 7 and 8.
In another preferred embodiment, a neutral washing procedure is carried out prior to the enzymatic hydrolysis or alkaline wash procedure described above.
Another aspect of the invention refers to an acid washing procedure which includes performing each of these stages at least once:
a3) Mixing the initial vegetable matter with water, bringing this mixture to a pH of between 2 and 4 and keeping it in agitation for a period of between 20 and 60 minutes.
b3) Performing a wash and a solid-liquid separation.

In a more preferred embodiment, the pH of the mixture at stage (a3) is between 3.5 and 3.7.
In another more preferred embodiment agitation time at stage (a3) is 30 minutes.
In another more preferred embodiment, temperature at stage (a3) is controlled between 60 and 95 °C.
In another more preferred embodiment it is 80 °C.
In another more preferred embodiment, an acid wash procedure is carried out prior to the enzymatic hydrolysis or alkaline wash or neutral was procedures described above.
In the present invention solid-liquid separation refers to any process of this type known by any expert in the technique. Examples of solid-liquid separation processes applicable to the procedures of the invention are decanting, precipitation, sedimentation, sieving, centrifugation filtration and cyclone, evaporation or drying. Preferably, the solid-liquid separation is carried out by centrifugation.
In a preferred embodiment, the plant matter comes from rice, wheat, soy, corn, pea, carob, sunflower, potato, cotton, lentil or chickpea. In a more preferred embodiment the initial plant matter is rice.
In a preferred embodiment the contaminant to be reduced is a choice made between metals, mycotoxins, or microorganisms.
In a more preferred embodiment, metals are selected from heavy metals and other minerals. Not-limiting examples of metals are As, Cd, Pb, Hg, Al, Mo or V.
In another more preferred embodiment mycotoxins are selected from fumonisin B1, deoxynivalenol, ochratoxin A, and aflatoxins B1, B2, G1, G2, M1 or M2.
In a more preferred embodiment, microorganisms are selected from moulds, yeasts or bacteria. Non-limiting examples of microorganisms are *E.coli, Salmonella, Cronobacter Sakazaaki, Bacillus cereus, Staphylococcus aerus* or *Lysteria.*
Different acid or neutral wash and alkaline treatment procedures can be used alone or in combination and in any order prior to the main procedure of the invention, enzymatic hydrolysis, depending on the specific contaminant or contaminants it is sought to eliminate from the initial matter.
The values given for temperature, time and pH can vary in practice ± 0.5 for pH, ± 3 for temperature and ± 10 for time, since, due to the different chemical and/or biochemical reactions occurring during the processes, it is difficult to keep these parameters set at such specific values.
Throughout the description and the claims the word "includes" and its variants is not intended to exclude other technichal features, additives, components or steps. For experts in the field, other aims, advantages and features of the invention will, in part, arise from the description and, in part, from the practice of the invention. The following examples and figures are provided by way of illustration, and it is not intended that they should limit the present invention.

### BRIEF DESCRIPTION OF THE FIGURES

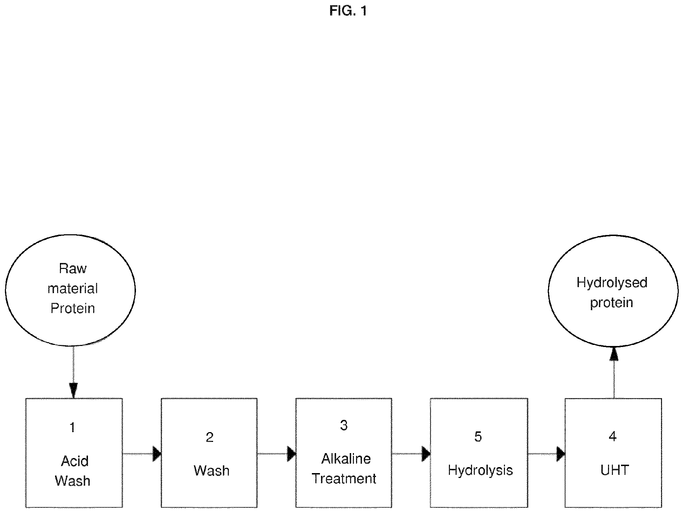

**FIG. 1****.** Schematic description of the entire process.

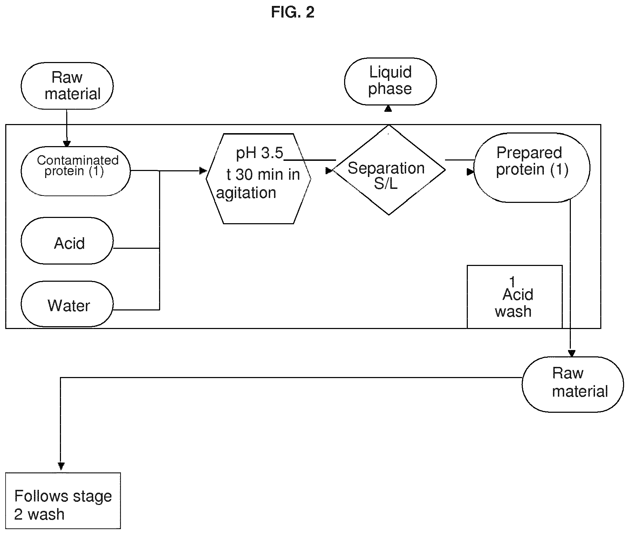

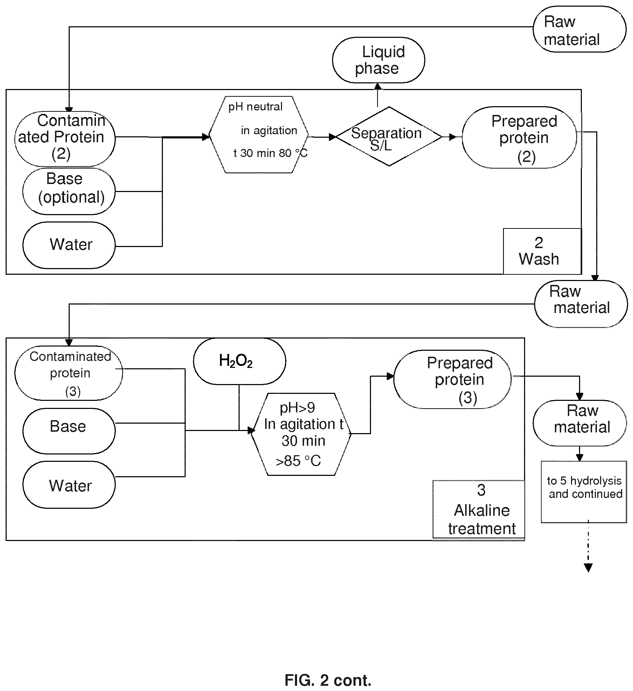

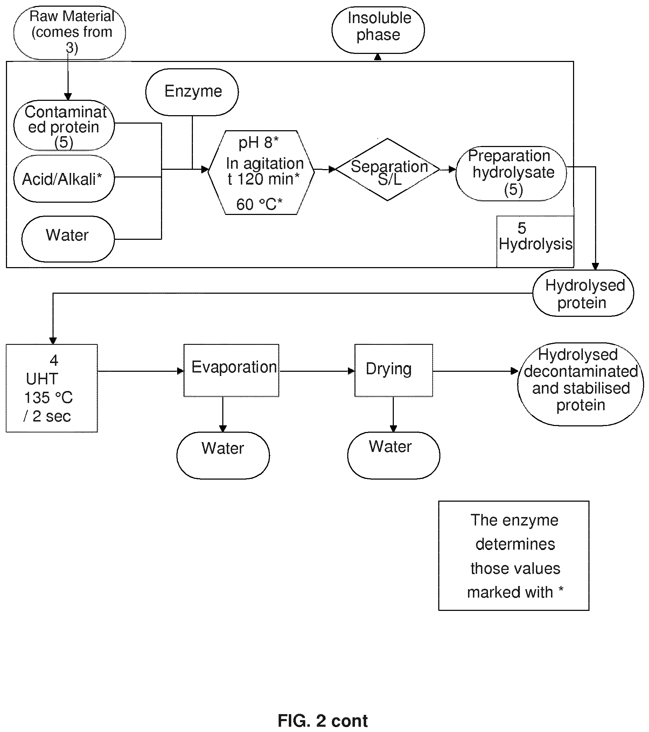

**FIG. 2**. Detailed description of the entire process.

### EXAMPLES

Below, the invention is illustrated by way of some tests carried out by the inventors, showing the effectiveness of the invention's product.

### PROCEDURE FOR REDUCING HEAVY METALS

To prepare the initial raw material for the process 150 Kg of rice protein (raw material) was suspended in 2,500 L of water.

This mixture was stabilised at 19 °C for 30 minutes and its pH was adjusted up to a value of between 3.5 and 3.7 (+/-0.5) using HCI. Specifically, the mixture's initial pH was 4.76 and a final pH of 3.68 was obtained using 2.5 of HCI. This mixture was separated using a horizontal centrifuge (decanter).
The resulting heavy phase (solids from the first wash), was used for a second wash. In order to do this, 2,500 L of water was added, it was heated while in agitation to 66 °C and its pH was adjusted to between 7.0 and 8.0 (+/-0.5) using 80% potash, agitation was maintained until the pH stabilised. Specifically, 4.4 kg of potash was added to change an initial pH of 4.08 to a final pH of 7.31. Following this process, a new solid-liquid separation was carried out using a horizontal centrifuge (decanter).
The resulting heavy phase (solids from the second wash) was used as a substrate in the enzymatic hydrolysis. In order to do this, 2,500 L water was added, stabilised at 60 °C and pH was adjusted from an initial pH of 6.75 to a final pH of 7.59 by adding 1 L of NaOH 50%. 1 L of protease was added and these conditions were maintained for 70 minutes. The initial pH was 7.59 and the final pH, 6.79. The enzyme was then deactivated by raising the temperature to 85 ºC and keeping it at that level for 30 minutes.
Following that, separation was performed using a basket centrifuge and further clarification of the liquid was carried out using a plate centrifuge. The resulting light phase was stabilised by evaporation and spray drying. This powder is the end product and low in contaminants (end product).

### Determination of the contaminants in the samples obtained during the process.

A sample was taken of the end product powder and we proceeded to determine quantitatively, using standard methods, the heavy metals set out in table 1 (ICP-Vis). The results obtained indicate that an independent fractionation for each metal occurred during the process. The results obtained are listed below (in mg/100 g) for the product as compared to the maximum limit (LIM.):

**Table 1**

| **Element** | **Raw materia** | **Solid from the first wash** | **Solid from the second wash** | **End product** | **LIM.** |
|---|---|---|---|---|---|
| Pb | 0.007 | 0.010 | 0.004 | 0.005 | 0.005 |
| Cd | 0.023 | 0.004 | 0.004 | 0.002 | 0.005 |
| As | 0.006 | 0.002 | 0.002 | 0.005 | 0.01 |
| Hg | 0.002 | 0.001 | 0.002 | 0.001 | 0.005 |
| Al | 1.22 | 1.44 | 1.03 | 0.412 | 3 |

As can be seen from this data, an acid pH wash process significantly reduces Cd and As, a pH neutral wash significantly reduces Pb and As, and the hydrolysis and clarification process significantly reduces the amounts of Cd, Hg and Al.

### Procedure for reducing aflatoxin B1 and aerobic mesophiles

To prepare the raw material for initiating the process 300 Kg of rice protein was used (raw material) and suspended in 3,100 L of water.
This mixture was stabilised at 85 °C for 60 minutes and its pH was adjusted to a value between 9 (+/-0.2) using NaOH. Specifically, the mixture's initial pH was 5.42 and a final pH of 9.15 was obtained using 5Kg of NaOH (50%), hydrogen peroxide was added up to 10L.
The resulting mixture was used as a substrate of the hydrolysis enzyme. In order to do so, it was stabilised at 60 °C and the pH was adjusted from an initial pH of 9.15 to a final pH of 8.1 by adding 1 L of HCL 35%. 1.2 L of protease was added and conditions were maintained for 80 minutes. The initial pH was 8.1 and the final pH, 5.93. The enzyme was then deactivated by raising the temperature to 85 ºC and keeping it at that level for 30 minutes.
Following that, separation was performed using a basket centrifuge and further clarification of the liquid was carried out using a plate centrifuge. The resulting light phase was concentrated by evaporation.

The resulting syrup is pasteurised in a tank heated up to 80-85 °C and kept in agitation to remove the H2O2 for a minimum of 3 hours
Finally, the product was stabilised by spray drying. This powder is the final product and low in aflatoxins and microbiological species (final product).

### Determining contaminants in the samples obtained during the process.

A sample of the end product powder was taken and we proceeded to determine quantitatively, using standard methods, its aflatoxin and aerobic mesophile contents. These are set out in table 2. The results obtained indicate that there has been a reduction in aflatoxin B1 and mesophilic aerobic microorganisms during the process. The results obtained (in ppb for aflatoxins and cfu/g for the aerobic mesophiles) are listed below:

**Table 2**

| **Substance** | **Raw material** | **End product** | **LIM.** |
|---|---|---|---|
| Aflatoxin B1 | 2.3 | 0.05 | 0.3 |
| Aflatoxin B2 | <0.050 | <0.050 | 0.3 |
| Aflatoxin G1 | <0.050 | <0.050 | 0.3 |
| Aflatoxin G2 | <0.050 | <0.050 | 0.3 |
| Aerobic mesophiles | 2,500 | 1,800 | 10,000 |

As can be seen from the data, the alkali treatment significantly reduces aflatoxin B1 and the pasteurisation process reduces microbial load.

## Claims

1. This invention refers to a procedure for reducing contaminants in vegetable protein which includes performing each of the following steps at least once:
a) Mixing the initial vegetable matter with water and at least one type of protease enzyme, bringing the mixture to a pH of between 3 and 10 and keeping it in agitation for a period of at least 20 minutes, at a temperature of between 20 and 90 °C,
b) Optionally, performing a wash and a solid-liquid separation of the product obtained in the previous stage,
c) Optionally, subjecting the hydrolysate obtained in the previous stage to a sterilisation process.

2. A procedure according to claim 1 where the pH of the mixture obtained from stage (a) is between 5 and 8.

3. A procedure according to the above claim where the pH of the mixture from stage (a) is 7.5.

4. A procedure according to any of the above claims where the time of agitation at stage (a) is from 60 to 180 minutes.

5. A procedure according to the above claim where the time of agitation at stage (a) is 70 minutes.

6. A procedure according to any of the above claims where temperature during stage (a) is between 50 and 80 °C.

7. A procedure according to the above claim where the temperature during stage (a) is 60 °C.

8. A procedure according to any of the above claims where the sterilisation process during stage (c) can be either UHT sterilisation or pasteurisation.

9. This invention refers to a procedure for reducing contaminants in vegetable protein which includes performing each of the following steps at least once:
a1) Mixing the initial vegetable matter with water in the presence of hydrogen peroxide, bringing this mixture to a pH of above 9 and keeping it in agitation for some time, at least, 20 minutes, at a temperature of between 75 and 95 °C and
b1) Optionally, performing a wash and a solid-liquid separation of the product obtained during stage a1).

10. A procedure according to claim 9 where the time of agitation of the mixture obtained from stage (a1) is 60 minutes.

11. A procedure according to either of claims 9 or 10 where the temperature of stage (a1) is 85 to 90 °C.

12. A procedure according to any of the claims from 9 to 11 which includes carrying out stage (a1) and optionally (b1) prior to stage (a) of the procedure described according to any one of claims 1 to 8.

13. A procedure for reducing contaminants in vegetable protein which includes performing each of the following steps at least once:
a2) Mixing the initial vegetable matter with water, bringing this mixture to a pH of between 6.5 and 8.5 and keeping it in agitation for a period of between 20 and 60 minutes, at a temperature of between 60 and 90 °C,
b2) Carrying out a wash and a solid-liquid separation

14. A procedure according to claim 13 where the pH of stage (a2) is between 7 and 8.

15. A procedure according to either of claims 13 or 14 where the time of agitation of stage (a2) is 30 minutes.

16. A procedure according to any of the claims from 13 to 15 where the temperature of stage (a2) is between 60 and 80 °C.

17. A procedure according to the claim above where the temperature of stage (a2) is 66 °C.

18. A procedure according to any of the claims from 13 to 17, which includes carrying out stage (a2) and (b2) prior to stage (a) of the procedure described according to any claim from 1 to 8 or prior to stage (a1) of the procedure described according to any claim from 9 to 12.

19. A procedure for reducing contaminants in vegetable protein which includes performing each of the following steps at least once:
a3) Mixing the initial vegetable matter with water, bringing this mixture to a pH of between 2 and 4 and keeping it in agitation for a period of between 20 and 60 minutes, and
b3) Performing a wash and a solid-liquid separation.

20. A procedure according to the claim above where the pH of the mixture at stage (a3) is of 3.5 to 3.7.

21. A procedure according to any of the claims from 19 to 20 where the agitation time at stage (a3) is 30 minutes.

22. A procedure according to any of the claims from 19 to 21 where the temperature at stage (a3) is controlled to be between 60 °C and 95 °C.

23. A procedure according to the above claim where the temperature at stage (a3) is 80 °C.

24. A procedure according to any of the claims from 19 to 23, which includes carrying out stages (a3) and (b3) prior to stage (a) of the procedure described according to any of the claims from 1 to 8 or prior to stage (a1) of the procedure described according to any of the claims from 9 to 12 or prior to stage (a2) of the procedure described according to any of the claims from 13 to 18.

25. A procedure according to any of the claims above where the plant matter comes from rice, wheat, soy, corn, pea, carob, sunflower, potato, cotton, lentil or chickpea.

26. A procedure according to any of the claims above where the contaminant to be reduced is selected from metals, mycotoxins or microorganisms.

27. A procedure according to the above claim where metals are selected from As, Cd, Pb, Hg, Mo or V.

28. A procedure according to claim 26 where the mycotoxins are selected from fumonisin B1, deoxynivalenol, ochratoxin A or aflatoxins B1, B2, G1, G2, M1 or M2.

29. A procedure according to claim 26 where the microorganism is selected from moulds, yeasts or bacteria.

30. A procedure according to the above claim where the microorganism is selected from *E. coli, Salmonella, Cronobacter Sakazaaki, Bacillus cereus, Staphylococcus aerus* or *Lysteria.*
